(19) Europäisches Patentamt
European Patent Office
Office européen des brevets

(11) EP 0 774 904 B1

(12) **EUROPEAN PATENT SPECIFICATION**

(45) Date of publication and mention of the grant of the patent:
**14.10.1998 Bulletin 1998/42**

(21) Application number: **95927214.7**

(22) Date of filing: **21.07.1995**

(51) Int. Cl.$^6$: **A01N 47/36**, A01N 43/653

(86) International application number:
**PCT/US95/08970**

(87) International publication number:
**WO 96/03878 (15.02.1996 Gazette 1996/08)**

(54) **HERBICIDAL MIXTURES**
HERBIZIDE MISCHUNGEN
MELANGES HERBICIDES

(84) Designated Contracting States:
**BE DE FR GB IT**

(30) Priority: **02.08.1994 US 284774**

(43) Date of publication of application:
**28.05.1997 Bulletin 1997/22**

(73) Proprietor:
**E.I. DU PONT DE NEMOURS AND COMPANY**
**Wilmington Delaware 19898 (US)**

(72) Inventor:
**TEANEY, Shawn, Randolph**
**Oxford, PA 19363 (US)**

(74) Representative: **Woodman, Derek**
**Frank B. Dehn & Co.,**
**European Patent Attorneys,**
**179 Queen Victoria Street**
**London EC4V 4EL (GB)**

(56) References cited:
**WO-A-90/02120**
**WO-A-92/15576**
**WO-A-94/09629**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 774 904 B1

## Description

BACKGROUND OF THE INVENTION

WO 94/09629 discloses mixtures of sulfonylureas and triazolinones, but does not disclose the mixture of this invention. WO 92/15576 and WO 90/02120 disclose Formula **I** compounds and the Formula **II** compound, respectively, but do not disclose the mixtures of this invention.

SUMMARY OF THE INVENTION

This invention relates to mixtures of the sulfonylurea of Formula **I**

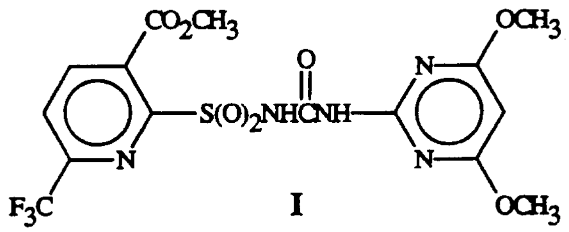

I

(methyl 2-[[[[(4,6-dimethoxy-2-pyrimidinyl)amino]carbonyl]amino]sulfonyl]-6-(trifluoromethyl)-2-pryidinecarboxylate) and agriculturally suitable salts thereof with the triazolinone of Formula **II**

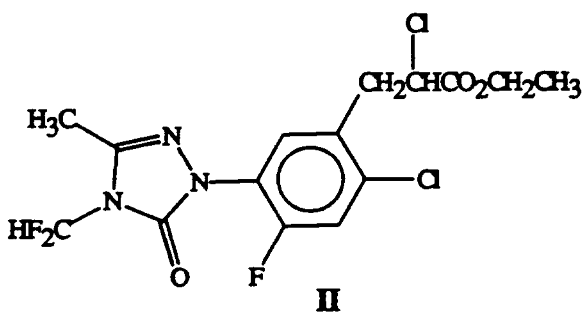

II

(ethyl α,2-dichloro-5-[4-(difluoromethyl)-4,5-dihydro-3-methyl-5-oxo-1*H*-1,2,4-triazol-1-yl]-4-fluorobezenepropanoate), which have now been discovered to synergistically control weeds. This invention also relates to herbicidal compositions comprising effective amounts of the aforesaid mixtures and at least one of the following: surfactant, solid or liquid diluent. This invention also relates to a method for controlling undesired vegetation comprising applying to the locus of the vegetation herbicidally effective amounts of the aforesaid mixtures.

Agriculturally suitable salts of the sulfonylurea of Formula **I** include, but are not limited to, quaternary amine salts, and the alkali metal salts of Formula **Ia**

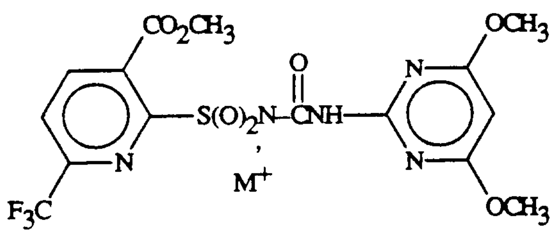

Ia

wherein M is an alkali metal, such as lithium, sodium or potassium.

The Formula **II** compound may exist as two stereoisomers which include the R- and S-enantiomers. One skilled in the art will appreciate that one stereoisomer may be more active and/or may exhibit other beneficial effects when

enriched relative to the other stereoisomer or when separated from the other stereoisomer. One skilled in the art knows how to separate said enantiomers. Accordingly, the present invention comprises mixtures of Formula **I** sulfonylurea in admixture with the racemic mixtures, individual stereoisomers, and enriched optically active mixtures of the Formula **II** enantiomers.

The mixtures of the invention preferred for enhanced activity include:

1. A herbicidal mixture comprising the sulfonylurea salt of Formula **Ia** wherein M is Na and the triazolinone of Formula **II.**
2. A herbicidal mixture comprising the sulfonylurea of Formula **I** and the triazolinone of Formula **II.**

For reason of weed control spectrum and/or crop selectivity, the preferred crops for application of the mixtures of this invention are wheat and barley.

<u>DETAILS OF THE INVENTION</u>

The Formula **I** sulfonylurea can be prepared as described in WO 92/15576. The synthesis involves the coupling of the pyridinesulfonamide of Formula **1** with the heterocyclic carbamate of Formula **2.**

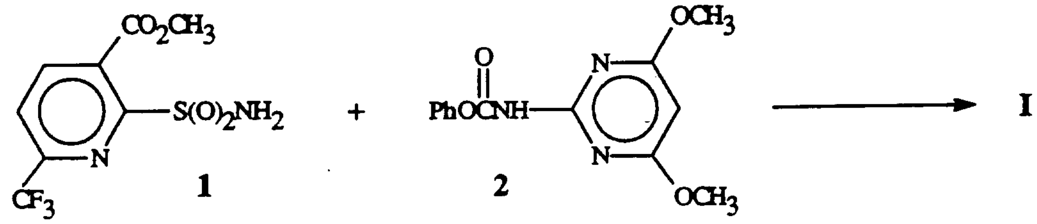

**1** **2**

The mixtures of the present invention can include the sulfonylurea of Formula **I** as one or more of its agriculturally suitable salts. These can be prepared in a number of ways known in the art. For example, metal salts can be made by contacting the sulfonylurea of Formula **I** with a solution of an alkali or alkaline earth metal salt having a sufficiently basic anion (e.g., hydroxide, alkoxide, carbonate or hydride). Quaternary amine salts can be made by similar techniques. WO 92/15576 describes the preparation of the salt of Formula **Ia** wherein M is Na by use of sodium methoxide.

Salts of the sulfonylurea of Formula **I** can also be prepared by exchange of one cation for another. Cationic exchange can be effected by direct contact of an aqueous solution of a salt of the sulfonylurea of Formula **I** (e.g., alkali or quaternary amine salt) with a solution containing the cation to be exchanged. This method is most effective when the desired salt containing the exchanged cation is insoluble in water and can be separated by filtration.

Exchange may also be effected by passing a aqueous solution of a salt of the sulfonylurea of Formula **I** (e.g., an alkali metal or quaternary amine salt) through a column packed with a cation-exchange resin containing the cation to be exchanged for that of the original salt and the desired product is eluted from the column. This method is particularly useful when the desired salt is water soluble (e.g., a potassium, sodium or calcium salt).

The Formula **II** triazolinone can be prepared by methods described in WO 90/02120 which involve the reaction of the aniline of Formula **3** with the acrylate of Formula **4** under Meerwein conditions.

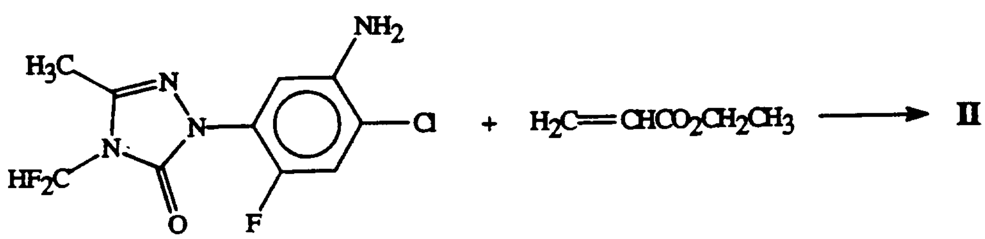

**3** **4**

Formulation/Utility

The mixtures of the Formula **I** (including Formula **Ia**) and Formula **II** compounds can be formulated in a number of ways:

(a) the Formula **I** and Formula **II** compounds can be formulated separately and applied separately or applied simultaneously in an appropriate weight ratio, e.g., as a tank mix; or
(b) the Formula **I** and Formula **II** compounds can be formulated together in the proper weight ratio.

Mixtures of the Formula **I** and Formula **II** compounds will generally be used in formulation with a agriculturally suitable carrier comprising a liquid or solid diluent and/or a surfactant wherein the formulation is consistent with the physical properties of the active ingredients, mode of application and environmental factors such as soil type, moisture and temperature. Useful formulations include liquids such as solutions (including emulsifiable concentrates), suspensions, emulsions (including microemulsions and/or suspoemulsions) and the like which optionally can be thickened into gels. Useful formulations further include solids such as dusts, powders, granules, pellets, tablets, films, and the like which can be water-dispersible ("wettable") or water-soluble. Active ingredients can be (micro)-encapsulated and further formed into a suspension or solid formulation; alternatively the entire formulation of active ingredient can be encapsulated (or "overcoated"). Encapsulation can control or delay release of the active ingredients. Sprayable formulations can be extended in suitable media and used at spray volumes from about one to several hundred liters per hectare. High-strength compositions are primarily used as intermediates for further formulation.

The formulations will typically contain effective amounts of active ingredients, diluent and surfactant within the following approximate rages which add up to 100 percent by weight.

| | Weight Percent | | |
|---|---|---|---|
| | Active Ingredient | Diluent | Surfactant |
| Water-Dispersible and Water-soluble Granules, Tablets and Powders | 5-90 | 0-94 | 1-15 |
| Suspensions, Emulsions, Solutions (including Emulsifiable Concentrates) | 5-50 | 40-95 | 0-15 |
| Dusts | 1-25 | 70-99 | 0-5 |
| Granules and Pellets | 0.01-99 | 5-99.99 | 0-15 |
| High Strength Compositions | 90-99 | 0-10 | 0-2 |

Typical solid diluents are described in Watkins, et al., *Handbook of Insecticide Dust Diluents and Carriers*, 2nd Ed., Dorland Books, Caldwell, New Jersey. Typical liquid diluents are described in Marsden, *Solvents Guide*, 2nd Ed., Interscience, New York, 1950. *McCutcheon's Detergents and Emulsifiers Annual*, Allured Publ. Corp., Ridgewood, New Jersey, as well as Sisely and Wood, *Encyclopedia of Surface Active Agents*, Chemical Publ. Co., Inc., New York, 1964, list surfactants and recommended uses. All formulations can contain minor amounts of additives to reduce foam, caking, corrosion, microbiological growth and the like, or thickeners to increase viscosity.

Surfactants include, for example, polyethoxylated alcohols, polyethoxylated alkylphenols, polyethoxylated sorbitan fatty acid esters, dialkyl sulfosuccinates, alkyl sulfates, alkylbenzene sulfonates, orgaosilicones, *N*,*N*-dialkyltaurates, lignin sulfonates, naphthalene sulfonate formaldehyde condensates, polycarboxylates, and polyoxyethylene/polyoxypropylene block copolymers. Solid diluents include, for example, clays such as bentonite, montmorillinite, attapulgite and kaolin, starch, sugar, silica, talc, diatomaceous earth, urea, calcium carbonate, sodium carbonate and bicarbonate, and sodium sulfate. Liquid diluents include, for example, water, *N*,*N*-dimethylformamide, dimethyl sulfoxide, *N*-alkylpyrrolidone, ethylene glycol, polypropylene glycol, paraffins, alkylbenzenes, alkylnaphthalenes, oils of olive, castor, linseed, tung, sesame, corn, peanut, cotton-seed, soybean, rape-seed and coconut, fatty acid esters, ketones such as cyclohexanone, 2-heptanone, isophorone and 4-hydroxy-4-methyl-2-pentanone, and alcohols such as methanol, cyclohexanol, decanol and tetrahydrofurfuryl alcohol.

Solutions, including emulsifiable concentrates, can be prepared by simply mixing the ingredients. Chemically stabilized aqueous sulfonylurea or agriculturally suitable sulfonylurea salt dispersions are taught in U.S. 4,936,900. Solution formulations of sulfonylureas with improved chemical stability are taught in U.S. 4,599,412. Dusts and powders can be prepared by blending and, usually, grinding as in a hammer mill or fluid-energy mill. Suspensions are usually prepared by wet-milling; see, for example, U.S. 3,060,084. Granules and pellets can be prepared by spraying the active material upon preformed granular carriers or by agglomeration techniques. See Browning, "Agglomeration", *Chemical Engineering*, December 4, 1967, pp 147-48, *Perry's Chemical Engineer's Handbook*, 4th Ed., McGraw-Hill, New York, 1963, pages 8-57 and following, and WO 91/13546. Pellets can be prepared as described in U.S. 4,172,714. Water-dispersible and water-soluble granules can be prepared as taught in U.S. 4,144,050, U.S. 3,920,442 and DE 3,246,493. Tablets can be prepared as taught in U.S. 5,180,587, U.S. 5,232,701 and U.S. 5,208,030. Films can be prepared as taught in GB 2,095,558 and U.S. 3,299,566.

For further information regarding formulation, see U.S. 3,235,361, Col. 6, line 16 through Col. 7, line 19 and Examples 10-41; U.S. 3,309,192, Col. 5, line 43 through Col. 7, line 62 and Examples 8, 12, 15, 39, 41, 52, 53, 58, 132, 138-140, 162-164, 166, 167 and 169-182; U.S. 2,891,855, Col. 3, line 66 through Col. 5, line 17 and Examples 1-4; Klingman, *Weed Control as a Science*, John Wiley and Sons, Inc., New York, 1961, pp 81-96; and Hance et al., *Weed Control Handbook*, 8th Ed., Blackwell Scientific Publications, Oxford, 1989.

In the following Examples, all percentages are by weight and all formulations are prepared in conventional ways. Compound numbers refer to compounds identified on Page 8.

Example A

| High Strength Concentrate | |
|---|---|
| Compound 1 | 33.0% |
| Compound 2 | 65.5% |
| silica aerogel | 0.5% |
| synthetic amorphous fine silica | 1.0%. |

Example B

| Wettable Powder | |
|---|---|
| Compound 1 | 22.0% |
| Compound 2 | 43.0% |
| dodecylphenol polyethylene glycol ether | 2.0% |
| sodium ligninsulfonate | 4.0% |
| sodium silicoaluminate | 6.0% |
| montmorillonite (calcined) | 23.0%. |

Example C

| Granule | |
|---|---|
| Compound 1 | 3.5% |
| Compound 2 | 6.5% |
| attapulgite granules (low volatile matter, 0.71/0.30 mm; U.S.S. No. 25-50 sieves) | 90.0%. |

Example D

| Aqueous Suspension | |
|---|---|
| Compound 1 | 8.5% |
| Compound 2 | 16.5% |
| hydrated attapulgite | 3.0% |
| crude calcium ligninsulfonate | 10.0% |
| sodium dihydrogen phosphate | 0.5% |
| water | 61.5%. |

Example E

| Extruded Pellet | |
|---|---|
| Compound 1 | 8.5% |
| Compound 2 | 16.5% |
| anhydrous sodium sulfate | 10.0% |
| crude calcium ligninsulfonate | 5.0% |
| sodium alkylnaphthalenesulfonate | 1.0% |
| calcium/magnesium bentonite | 59.0%. |

Test results indicate that mixtures of compounds of Formula **I** and Formula **II** are highly active herbicides, providing unexpected synergistic control of selected grass and broadleaf weeds. The mixtures are valued, because they retain acceptable levels of crop selectivity in certain major agronomic crops such as barley, cotton, wheat, corn, soybeans and rice. The mixtures are particularly valued because of the acceptable levels of crop selectivity they retain in barley and wheat.

The Formula **I** and Formula **II** mixtures of this invention can additionally be used in combination with other commercial herbicides, insecticides or fungicides. A mixture of one or more additional herbicides with the Formula **I** and Formula **II** mixtures of this invention may be particularly useful for weed control. Examples of other herbicides as mixture pacers are: anilofos, bensulfuron methyl, chlorsulfuron, cinosulfuron, imazamethabenz, mefluidide, metsulfuron methyl, rimsulfuron, thifensulfuron methyl, triasulfuron and tribenuron methyl, and herbicides with a similar spectrum of control but a different mode of action such as, but not limited to: barban, bentazon, bifenox, bromoxynil, bromoxynil heptanoate, bromoxynil octanoate, chloridazon, chlortoluron, clodinafop, clopyralid, cyanazine, dicamba, diclofop, dichlorprop, diclofop, difenzoquat, fenoxaprop, flamprop, flupoxam, fluridone, flurtamone, glufosinate, glyphosate, ioxynil, isoproturon, isoxaben, MCPA, MCPA-thioethyl, MCPB, mecoprop, mecoprop-P, methabenzthiazuron, metribuzin, pendimethalin, tri-allate, tralkoxydim, trifluralin, (2,4-dichlorophenoxy)acetic acid, and 4-(2,4-dichlorophenoxy)butanoic acid. In certain instances, combinations with herbicides having a similar spectrum of control but a different mode of action will be particularly advantageous for resistance management.

An herbicidally effective amount of both the compounds of Formula **I** and Formula **II** will vary depending on the specific compounds selected, environmental conditions, formulation, method of application, amount and type of vegetation present, etc. The use rate ratios of Formula **I** to Formula **II** are in general 1:15 to 1:1, with ratios of 1:4 to 1:1 preferred for most uses. A use rate ratio of 1:2 is particularly preferred. In general, the Formula **I** compounds should be applied at a rate from 0.0005 to 1 kg ai/ha and Formula **II** compounds should be applied at a rate from 0.001 to 2 kg ai/ha. Preferably, Formula **I** compounds should be applied at a rate from 0.002 to 0.03 kg ai/ha, and the Formula **II** compound should be applied at a rate from 0.004 to 0.03 kg ai/ha. One skilled in the art can readily determine application rates and ratios of herbicides of Formula **I** to the herbicide of Formula **II** as well as timing necessary for the desired level of weed control and crop safety.

The following Formula **I** sulfonylurea (Compound 1) was tested in combination with the Formula **II** triazolinone (Compound 2).

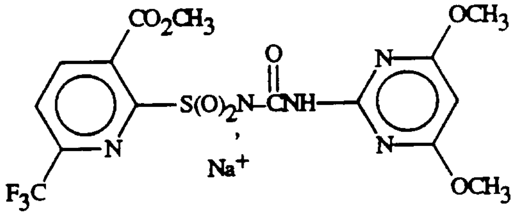

Compound 1

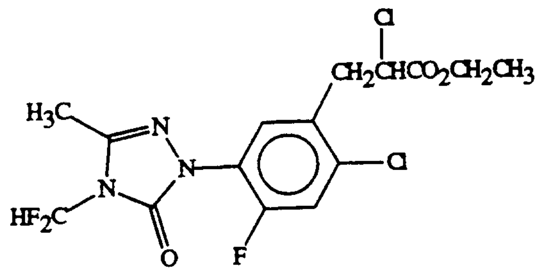

Compound 2

The following Test protocol was used for the Tests in Tables 1-3. The data demonstrate the efficacy of the Formula **I** and Formula **II** mixtures of this invention against specific weeds. The weed control afforded by the mixtures of this invention are not limited, however, to these species.

Test Protocol

Cereal crops were planted during fall into areas of high natural infestations of weed species such as; *Galium aparine* (GALAP), *Viola arvensis* (VIOAR), and various *Veronica sp.* (*V. persica* (VERPE), and *V. hederaefolia* (VERHE)). Test plots were typically 20 sq meters (2 meters wide by 10 meters in length), with the entire test plot area treated postemergence to the crops and weeds. Compound 1 and Compound 2 were both formulated as single active ingredients in 50% strength dry flowable granules. Compound 1 and Compound 2 were formulated as a mixture in a ratio of 1:2 respectively, in 50% total active ingredient strength paste extruded granules. Herbicides were applied to the test area by diluting the formulated herbicides in an aqueous solution to the appropriate concentration to deliver the desired use rate, spray volumes between 150 to 300 L/ha were typically used. The prepared test solutions were then sprayed onto the test plot using approximately 2 bars pressure through standard T-Jet flat-fan nozzles. Unless specifically indicated, no additional adjuvants such as surfactants were added to the spray solution. Individual treatments were typically replicated three times at any given field trial location.

Assessments of weed control were made by visual inspection at intervals following herbicide application. The specific tests for Tables 1-3 were final evaluations which ranged from 34 to 200 days after application. A visual rating system was used based on a percentage scale from 0 to 100%, relative to an adjacent untreated control plot or test area. On this scale 0% represents no visual differences relative to an untreated control, 100% represents complete kill of the given crop or weed species.

Colby's equation was used to calculate the expected additive herbicidal effect of the mixtures of Compound 1 and Compound 2. Colby's equation (Colby, S. R. "Calculating Synergistic and Antagonistic Responses of Herbicide Combinations," *Weeds*, 15(1), pp 20-22 (1967)) calculates the expected additive effect of herbicidal mixtures, and for two active ingredients is of the form:

$$P_{a+b} = P_a + P_b - (P_a P_b/100)$$

wherein

$P_{a+b}$ is the percentage effect of the mixture expected from additive contribution of the individual components,
$P_a$ is the observed percentage effect of the first active ingredient at the same use rate as in the mixture, and
$P_b$ is the observed percentage effect of the second active ingredient at the same use rate as in the mixture.

Tables 1 through 3 represent final visual assessments of control of specific weeds with Compound 1 and Compound 2 applied alone as single active ingredients, applied as a mixture of the two active ingredients of Compound 1 and Compound 2, and the expected additive effect of the herbicidal mixture of Compound 1 and Compound 2 (Colby's equation). Different ratios of Compound 1 to Compound 2, and different formulation types, should also provide useful weed control from the combination of the two herbicides.

**TABLE 1***

Control of *Viola arvensis* Using Compound 1 and Compound 2 as Single Active Ingredients and in Admixture

| Compound | Rate (g ai/ha) | Test 1 | Test 2 | Test 3 | Test 4 | Test 5 |
|---|---|---|---|---|---|---|
| 1 | 10 | 72 | 38 | 0 | 35 | 75 |
| 2 | 20 | 83 | 63 | 0 | 10 | 50 |
| 1 + 2 | 10 + 20 | 97 (95)† | 97 (77) | 65 (0) | 70 (42) | 100 (88) |

* Tests 1–5 were conducted at different locations. Data are reported as percent control

† Expected effects in parentheses are calculated according to Colby, S. R. "Calculating Synergistic and Antagonistic Responses of Herbicide Combinations," *Weeds*, 15(1), pp 20–22 (1967)

**TABLE 2***

Control of Two *Veronica* sp. Using Compound 1 and Compound 2 as Single Active Ingredients and in Admixture

| Compound | Rate (g ai/ha) | VERPE† | | | VERHE† | | |
|---|---|---|---|---|---|---|---|
| | | Test 1 | Test 2 | Test 3 | Test 4 | Test 5 | Test 6 |
| 1 | 10 | 37 | 47 | 0 | 0 | 20 | 23 |
| 2 | 20 | 100 | 92 | 50 | 70 | 70 | 89 |
| 1 + 2 | 10 + 20 | 100 (100)‡ | 98 (96) | 70 (50) | 80 (70) | 85 (76) | 97 (92) |

* Tests 1–6 were conducted at different sites. Data are reported as percent control

† Weed species: VERPE = *Veronica persica*; VERHE = *Veronica hederaefolia*

‡ Expected effects in parentheses are calculated according to Colby, S. R. "Calculating Synergistic and Antagonistic Responses of Herbicide Combinations," *Weeds*, 15(1), pp 20–22 (1967)

**TABLE 3***

Control of *Galium aparine* Using Compound 1 and Compound 2 as Single Active Ingredients and in Admixture

| Compound | Rate (g ai/ha) | Test 1 | Test 2 | Test 3 | Test 4 |
|---|---|---|---|---|---|
| 1 | 10 | 70 | 85 | 55 | 75 |
| 2 | 20 | 89 | 90 | 75 | 85 |
| 1 + 2 | 10 + 20 | 94 (97)† | 100 (98) | 90 (89) | 99 (96) |

* Tests 1–4 were conducted at different sites. Data are reported as percent control

† Expected effects in parentheses are calculated according to Colby, S. R. "Calculating Synergistic and Antagonistic Responses of Herbicide Combinations," *Weeds*, 15(1), pp 20–22 (1967)

## Claims

**1.** A herbicidal mixture comprising an herbicidally effective amount of the compound of Formula I

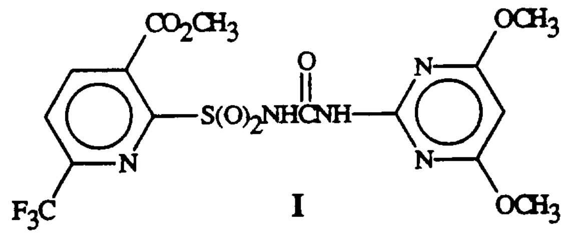

I ,

which is methyl 2-[[[[(4,6-dimethoxy-2-pyrimidinyl)amino]carbonyl]amino]sulfonyl]-6-(trifluoromethyl)-3-pyridinecarboxylate and agriculturally suitable salts thereof and an herbicidally effective amount of the compound of Formula **II**

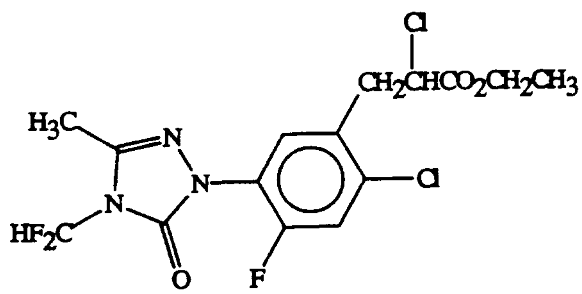

,

II

which is ethyl α,2-dichloro-5-[4-(difluoromethyl)-4,5-dihydro-3-methyl-5-oxo-1*H*-1,2,4-triazol-1-yl]-4-fluorobenzenepropanoate.

2. An agriculturally suitable composition for controlling the growth of undesired vegetation comprising an effective amount of the herbicidal mixture of Claim 1 and at least one of the following: surfactant, solid or liquid diluent.

3. A method for controlling the growth of undesired vegetation comprising contacting the locus to be protected with a herbicidally effective amount of the composition of Claim 2.

4. A herbicidal mixture of Claim 1 comprising the sodium salt of the compound of Formula **I** and the compound of Formula **II**.

## Patentansprüche

1. Herbizide Mischung, umfassend eine herbizid wirksame Menge der Verbindung der Formel I

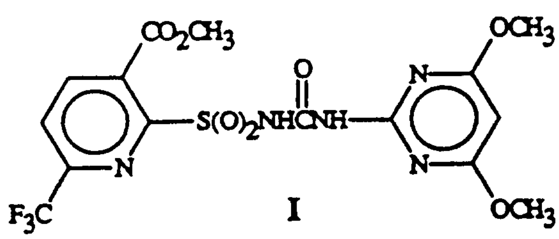

I

die Methyl-2-[[[[(4,6-dimethoxy-2-pyrimidinyl)amino]carbonyl] amino]sulfonyl]-6-(trifluormethyl)-3-pyridincarboxylat ist, und landwirtschaftlich geeigneter Salze davon und eine herbizid wirksame Menge der Verbindung der Formel II

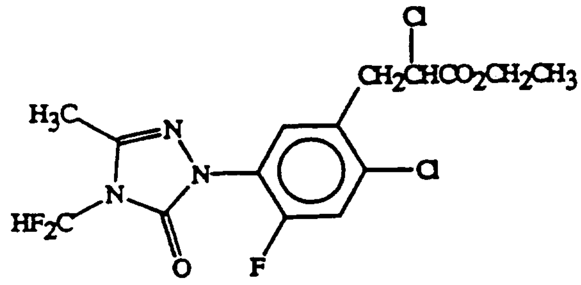

II

die Ethyl-α,2-dichlor-5-[4-(difluormethyl)-4,5-dihydro-3-methyl-5-oxo-1*H*-1,2,4-triazol-1-yl]-4-fluorbenzolpropionat ist.

2. Landwirtschaftlich geeignete Zusammensetzung zur Steuerung des Wachstums unerwünschter Vegetation, umfassend eine wirksame Menge der herbiziden Mischung nach Anspruch 1 und mindestens eines von den folgenden: oberflächenaktives Mittel, festes oder flüssiges Verdünnungsmittel.

3. Verfahren zur Steuerung des Wachstums unerwünschter Vegetation, umfassend das Inkontaktbringen der zu schützenden Örtlichkeit mit einer herbizid wirksamen Menge der Zusammensetzung nach Anspruch 2.

4. Herbizide Mischung nach Anspruch 1, umfassend das Natriumsalz der Verbindung der Formel I und die Verbindung der Formel II.

**Revendications**

1. Un mélange herbicide comprenant une quantité herbicidement active du composé de formule I

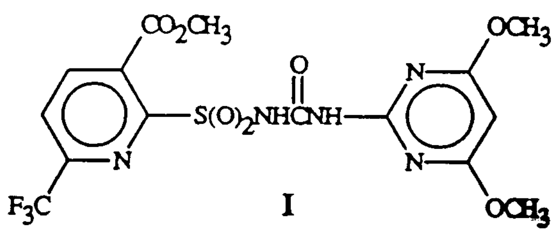

qui est le (méthyl-2-[[[[(4,6diméthoxy-2-pyrimidinyl)amino]carbonyl] amino]sulfonyl]-6-(trifluorométhyl)-3-pyridinecarboxylate) et ses sels appropriés à l'agriculture, et une quantité herbicidement efficace du composé de formule II

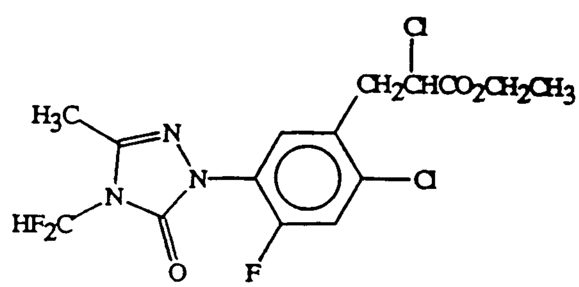

II

qui est l'α-2-dichloro-5-[4-(difluorométhyl)-4,5-dihydro-3-méthyl-5-oxo-1H-1,2,4-triazol-1-yl]-4-fluorobenènepropanoate d'éthyle.

2. Une composition convenable pour l'agriculture pour le contrôle de la croissance d'une végétation indésirable comprenant une quantité efficace du mélange herbicide selon la revendication 1 et au moins un des produits suivants : agent tensioactif, diluant solide ou liquide.

3. Une méthode pour contrôler la croissance d'une végétation indésirable comprenant la mise en contact du site à protéger avec une quantité herbicidiquement efficace de la composition selon la revendication 2.

4. Un mélange herbicide selon la revendication 1 comprenant le sel de sodium du composé de formule I et le composé de formule II.